# EUROPÄISCHE PATENTSCHRIFT

(11) **EP 2 393 660 B1**
(45) Veröffentlichungstag und Bekanntmachung des Hinweises auf die Patenterteilung: **19.12.2012**
(21) Anmeldenummer: 10700715.5
(22) Anmeldetag: 19.01.2010
(51) Int. Cl.: B32B 38/18, B32B 41/00, B42D 15/10

(54) **VERFAHREN ZUR HERSTELLUNG VON MEHRLAGIGEN SICHERHEITSPRODUKTEN**
METHOD FOR PRODUCING MULTILAYER SECURITY PRODUCTS
PROCÉDÉ DE FABRICATION DE PRODUITS DE SÉCURITÉ MULTICOUCHES

(30) Priorität: 04.02.2009 DE 102009007552
(43) Veröffentlichungstag der Anmeldung: 14.12.2011
(73) Patentinhaber: Bundesdruckerei GmbH, 10969 Berlin (DE)
(72) Erfinder: LEOPOLD, André, 10119 Berlin (DE); MÄRTENS, Detlef, 13599 Berlin (DE); SEIJO-BOLLIN, Hans-Peter, 10245 Berlin (DE); EHREKE, Jens, 12587 Berlin (DE); GAHLBECK, Jeffry, 12437 Berlin (DE)
(74) Vertreter: Maser, Jochen
(86) Internationale Anmeldenummer: PCT/EP2010/000266
(87) Internationale Veröffentlichungsnummer: WO 2010/089022

(56) Entgegenhaltungen:
- EP-A2- 0 997 270
- WO-A1-00/27634
- DE-A1-102006 025 504
- US-A1- 2005 067 497
- US-A1- 2005 257 880

## Beschreibung

Die Erfindung betrifft ein Verfahren zur Herstellung von mehrlagigen Sicherheitsprodukten, bestehend aus zumindest einer Karte und zumindest einer auf zumindest einer Seite der Karte aufgebrachten Polymerfolie, welche als Rollenware bereitgestellt wird und mit zumindest einem Sicherheitsmerkmal versehen ist.

Aus der DE 199 07 940 A1 geht eine Ausführungsform zur Herstellung von Sicherheitsprodukten hervor, bei welcher zunächst das in Rollenform produzierte und angelieferte Kunststoffrohmaterial in Bogen zerteilt wird. Der einzelne Bogen ist Träger einer festen Nutzenanzahl. Bestimmte Bögen müssen entsprechend ihrem Einsatzzweck bedruckt werden. Anschließend müssen die einzelnen Bogen passgenau übereinander geführt und fixiert werden. Die zusammengestellten Bogenlagen werden in einer Laminierpresse miteinander verbunden. Anschließend ist ein Aufbau von einem Sicherheitsprodukt abgeschlossen. Durch einen nachfolgenden Stanzvorgang werden die Karten einzeln aus dem Bogen gewonnen, die dann als fertiges Sicherheitsprodukt zum anschließenden Prozess zur Personalisierung zur Verfügung stehen.

Dieses Verfahren weist den Nachteil auf, dass die passgenaue Stapelung der Schichten übereinander und des sich daran anschließenden Laminiervorganges durch eine Laminierpresse aufgrund eines diskontinuierlichen Verfahrens zeitintensiv ist.

Aus der DE 199 07 940 A1 ist des Weiteren ein Verfahren zur Herstellung von einem mehrschichtigen Sicherheitsprodukt bekannt. Bei diesem Verfahren wird abweichend von dem vorstehend genannten Verfahren vorgeschlagen, dass das zu beschichtende Trägermaterial auf einer Rolle bereitgestellt, von dieser abgezogen und nach dem Bedrucken ein- oder beidseitig mit entsprechenden Deckfolien laminiert wird. Dabei wird ein hochgenauer Laminierprozess vorgesehen, um die Rollenware der bedruckten und beschichteten Bahn des Trägermaterials mit der Folie zu verbinden. Die Laminierfolie wird dabei ebenfalls von einer Rolle abgezogen, so dass die beiden von der Rolle abgezogenen Bahnen gemeinsam miteinander laminiert werden können. Dadurch wird ein kontinuierliches Herstellungsverfahren ermöglicht. Dieses kontinuierliche Verfahren erfordert, dass sowohl die in der Deckfolie oder Deckverbundfolie eingebrachten Sicherheitsmerkmale als auch die in dem Trägermaterial angeordneten Sicherheitsmerkmale einen einheitlichen Abstand aufweisen. Darüber hinaus ist eine exakte Zuführung der einzelnen Bahnen zum Kaschieren erforderlich. Des Weiteren können durch dieses Verfahren nur solche Sicherheitsprodukte hergestellt werden, bei denen das Sicherheitsprodukt aus einem biegbaren und von einer Rolle abziehbaren Kunststoffmaterial besteht. Die Verarbeitung von nicht aufwickelbaren Karten ist durch dieses Verfahren nicht möglich.

Aus der US 2005/0257880 A1 ist ein weiteres Verfahren zur Herstellung eines mehrschichtigen Sicherheitsproduktes bekannt, bei welchem einzelne Bögen nacheinander von einem Stapel abgezogen und über ein Transportband einer Folie zugeführt werden. Dieses Verfahren weist den Nachteil auf, dass jeder einzelne zugeführte Bogen exakt zu den jeweiligen Marken auf der Folie zugeordnet werden muss. Dadurch ist eine sehr zeitintensive Laminierung gegeben.

Der Erfindung liegt deshalb die Aufgabe zugrunde, ein Verfahren zur Herstellung von mehrlagigen Sicherheitsprodukten vorzuschlagen, welche aus zumindest einer Karte und zumindest einer auf zumindest einer Seite der Karte aufgebrachten Polymerfolie, welche als Rollenware hergestellt und mit zumindest einem Sicherheitsmerkmal versehen wird, besteht, bei dem eine kurze Produktionszeit zur Herstellung von einzelnen Sicherheitsprodukten gegeben ist, wobei eine exakte Zuordnung einzelner Karten zur Polymerfolie ermöglicht wird, die insbesondere dann nötig ist, wenn die einzelnen Kartennutzen ihrerseits bereits vorpersonalisiert sind.

Diese Aufgabe wird erfindungsgemäß durch ein Verfahren zur Herstellung von mehrlagigen Sicherheitsprodukten gelöst, bei dem eine Rollenbahn der Polymerfolie und zumindest zwei Streifen mit jeweils einer n-fachen Anzahl an Nutzen einer Kaschierstation derart zugeführt wird, dass ein definierter Abstand zwischen den zumindest zwei hintereinander angeordneten Streifen auf einem gemeinsamen Positionierband oder Transportband aufgebracht sind, und kaschiert wird, bei dem vor dem Kaschieren eine Steuermarke auf der Polymerfolie abgefragt wird, die dem zumindest einen auf der jeweiligen Karte aufzubringenden Sicherheitsmerkmal zugeordnet ist oder einer dem Nutzen oder dem Streifen zugeordnete Referenzmarke abgefragt wird oder die Steuerlinie und die Referenzmarke abgefragt werden und bei dem eine Zuführgeschwindigkeit oder eine Zuführrichtung oder beides von der Rollenbahn der Polymerfolie und dem Streifen zur exakten Ausrichtung zueinander angepasst werden.

Bei diesem erfindungsgemäßen Verfahren wird quasi ein Arbeitsprozess durchgeführt, welcher auf dem Prinzip "Rund auf Flach" beruht. Bei diesem Verfahren werden nacheinander Streifen mit einer n-fachen Anzahl an Nutzen einer Kaschierstation zugeführt. Der Transport erfolgt entlang einer Transportebene, und die Streifen werden in dieser Transportebene in der Kaschierstation verarbeitet, so dass die Zuführung nach dem Prinzip "Flach" erfolgt. Von einer Rolle wird die Polymerfolie abgezogen und der Kaschierstation zugeführt. Die Polymerfolie kann auch ein Folienverbund sein, der sich zum Beispiel aus einem zentralen Funktionspolymer sowie sich beidseitig befindlichen Schutzfolien zusammensetzt. Das Aufkaschieren der Polymerfolie erfolgt über eine Walze, also nach dem Prinzip "Rund", so dass das Prinzip "Rund auf Flach" verwirklicht wird. Durch diese Vorgehensweise wird ermöglicht, dass der in der Ebene zugeführte Streifen sowohl in X-Richtung, also in Transportrichtung, als auch in Y-Richtung, also quer zur Transportrichtung, zur Kaschierposition einstellbar ist und die abgezogene Rollenbahn analog einstellbar ist, so dass eine exakte Positionierung zueinander ermöglicht wird. Dies ermöglicht, dass eine schnelle Taktung zum Kaschierprozess voreinstellbar ist, da die vorbestimmten Abstände der einzelnen Streifen zueinander bekannt sind. Dies ist dann von Bedeutung, wenn die einzelnen Kartennutzen ihrerseits vorpersonalisiert sind, zum Beispiel mit einem Lichtbild, einer Dokumentennummer und dergleichen. Beispielsweise kann mindestens eine der Laminatfolien eines Kartenlaminats im Rahmen des Produktionsprozesses eine solche Personalisierung vor der Lamination aufweisen. Durch diese Kombination der Zuführung von einzelnen Streifen und der Polymerfolie wird eine Erhöhung der Bearbeitungsgeschwindigkeit bezüglich einer Ausführungsform erzielt, bei welcher die einzelnen Schichten stationär in einer Laminierpresse übereinander gelegt werden. Des Weiteren wird durch dieses erfindungsgemäße Verfahren gegenüber einem Arbeitsprinzip "Rund-Rund" der Vorteil erzielt, dass eine einfachere und präzisere Ansteuerung zur Positionierung der Polymerfolie bezüglich deren Sicherheitsmerkmalen auf den jeweiligen Nutzen gegeben ist und eine schnellere Bearbeitung in Bezug auf die Anzahl an Nutzen je Streifen ermöglicht wird.

Nach einer bevorzugten Ausgestaltung der Erfindung ist vorgesehen, dass der jeweilige Streifen mit einer Anzahl von Nutzen von n > 1 hergestellt wird. Bevorzugt ist vorgesehen, dass je Streifen drei bis zwanzig, insbesondere vier oder fünf, Nutzen vorgesehen sind. Die Streifen werden bevorzugt aus Bögen ausgeschnitten, bei denen beispielsweise vier Streifen a fünf Nutzen oder fünf Streifen a vier Nutzen vorgesehen sind. Diese Anordnung von mehreren bevorzugt hintereinander angeordneten Nutzen in einem Streifen weist den Vorteil auf, dass die Nutzen innerhalb des Streifens in einer definierten Reihenfolge bereits vorliegen, so dass auch, insbesondere bei einer Vorpersonalisierung dieser einzelnen Nutzen im Streifen, eine Übereinstimmung mit gegebenenfalls vorpersonalisierten oder personalisierten Polymerfolien leicht ermöglicht ist. Anstatt die laminierten Bögen bereitzustellen, welche in Streifen vor der dem Kaschieren mit der vorpersonalisierten oder personalisierten Polymerfolien vereinzelt werden, können auch laminierte Streifen mit entsprechenden Einzelnutzen bereitgestellt werden. Es erfolgt somit bevorzugt eine sogenannte Streifenlamination. In diesem Fall erfolgt die Lamination des Kartenlaminats nicht im Bogenformat, das mehrere Steifen umfasst, sondern die einzelnen zu laminierenden Laminatfolien liegen bereits als Streifen, dazu können sie gegebenenfalls auch aus einem Einzelbogen geschnitten werden, oder als Rolle vor. In diesem Fall gestaltet sich eine Verarbeitung von bereits vorpersonalisierten Laminatfolien einfacher, da man diese als Rolle zuführen kann. Auf diese Weise kann auch eine feste Reihenfolge der Streifen vorgegeben werden, die sich mit der Reihenfolge einer Personalisierung der Polymerfolie deckt. Nach der Lamination kann bevorzugt ein Randbeschnitt des Streifenlaminats erfolgen, so dass man z.B. eine saubere Anlagekante erhält.

Nach einer weiteren bevorzugten Ausgestaltung der Erfindung ist vorgesehen, dass der zumindest eine Streifen mit der n-fachen Anzahl von Nutzen vor dem Kaschieren mit der vorpersonalisierten oder personalisierten Polymerfolien aus einem Bogen vereinzelt, insbesondere ausgestanzt oder ausgeschnitten, wird. Durch diese Vereinzelung zu Streifen wird ermöglicht, dass die Reihenfolge einer Anzahl n von Nutzen auf einem Streifen bereits vorbestimmt ist und somit eine Vereinfachung im Aufwand zum hintereinander Anordnen der Nutzen zur anschließenden Kaschierung mit einer Polymerfolie gegeben ist. Dadurch wird ermöglicht, dass nicht jeder einzelne Nutzen einer Kaschierstation zugeführt werden muss, sondern dass mehrere Nutzen gemeinsam in einem Streifen einer Kaschierstation zugeführt werden können. Die Herstellung wird dadurch nicht nur vereinfacht, sondern auch zeitlich verkürzt.

Nach einer weiteren bevorzugten Ausgestaltung der Erfindung ist vorgesehen, dass nach dem Kaschieren der Polymerfolie auf den zumindest einen Streifen ein daraus gebildetes Streifenlaminat randbeschnitten wird. Dieser Arbeitsschritt kann ein Teil einer quasikontinuierlichen Streifenlamination sein.

Nach einer weiteren bevorzugten Ausgestaltung der Erfindung ist vorgesehen, dass die Vereinzelung der Streifen derart aus dem Bogen vor dem Kaschieren mit der Polymerfolie erfolgt, dass an einem Ende des Streifens ein nutzenfreier Raum verbleibt. Dieser nutzenfreie Raum dient als eine sogenannte Auslaufzone, welche insbesondere beim Verkleben der Polymerfolie auf dem Streifen von Vorteil ist. Die Abstände zwischen den Nutzen auf dem Streifen sind vorzugsweise gleich. Durch den nutzenfreien Raum kann ermöglicht werden, dass beim späteren Kaschieren und Andrücken der Polymerfolie ein Abfließen des Klebemittels in die Maschine verhindert wird. Insbesondere ist vorgesehen, dass das Klebemittel zum Verkleben der Polymerfolie auf dem Streifen derart beschichtet wird, dass nicht der vollständige Streifen beschichtet wird, sondern verbleibendes Klebemittel in der Auslaufzone beziehungsweise im Nutzenraum aufgenommen wird. Vorzugsweise ist vorgesehen, dass je nach Streifenlänge circa 2 % bis 30 % am Ende des Streifens, insbesondere 2 % bis 10 %, freigelassen werden, also zum Beispiel 1 cm bis 5 cm, bevorzugt 2 cm bis 3 cm.

Bevorzugt werden die Streifen zur Bildung einer Anlagekante definiert aus dem Bogen oder aus der Streifenlamination kantengenau ausgeschnitten. Dadurch kann eine erhöhte Präzision bei der Positionierung der Streifen zum Positionierband oder Transportband für die Kaschierung mit der Polymerfolie erfolgen.

Nach einer weiteren bevorzugten Ausgestaltung der Erfindung ist vorgesehen, dass mehrere Streifen in einer vordefinierten Reihenfolge hintereinander angeordnet werden. Dadurch wird sichergestellt, dass eine Zuordnung zu der aufzubringenden Polymerfolie, gegebenenfalls personalisierten, welche vorzugsweise mit zumindest einem Sicherheitsmerkmal versehen ist, in exakter Weise erfolgt. Insbesondere bei dem Einbringen einer vorpersonalisierten Laminatfolie in die Streifen kann vereinfacht eine exakte Zuordnung der jeweiligen Nutzen erfolgen.

Bevorzugt ist vorgesehen, dass der Abstand der Streifen derart eingestellt wird, dass der Abstand der letzten Nutzen vom vorausgehenden Streifen zum ersten Nutzen des nachfolgenden Streifens dem Abstand der Nutzen in dem jeweiligen Streifen entspricht. Dadurch wird ermöglicht, dass quasi ein konstanter Abstand von Nutzen zu Nutzen eingestellt werden kann unabhängig von der Tatsache, welche Anzahl von Nutzen auf einem Streifen aufgebracht sind und wie viele Streifen hintereinander angeordnet sind. Dadurch kann ein kontinuierlicher Kaschierprozess mit einer hohen Bahngeschwindigkeit erzielt werden. Dabei versteht sich, dass das zumindest eine für den jeweiligen Nutzen vorgesehene Sicherheitsmerkmal in einem entsprechenden Abstand auf der Polymerfolie aufgebracht ist, so dass lediglich ein einmaliger Einstellvorgang zu Beginn eines Kaschierprozesses erforderlich ist, um die Referenzmarke des Streifens oder die Referenzmarke der Nutzen auf eine Steuermarke der Polymerfolie abzustimmen.

Im Fall des Verwendens einer Auslaufzone für das Klebemittel ist natürlich der Abstand der Nutzen beim Streifenwechsel größer als der Abstand der Nutzen innerhalb eines Streifens. In diesem Fall wird dieser wechselnde Abstand in einer bevorzugten Ausgestaltung bei der Herstellung der Polymerfolie berücksichtigt. Beim Kaschierprozess sollte in diesem Fall der Abstand der Streifen stets gleich sein.

Bevorzugt können auch zwei oder mehrere Streifen nebeneinander auf dem Transportband vorgesehen sein. Dabei werden diese in einem definierten Abstand zueinander angeordnet und die Nutzen vorzugsweise auf gleicher Höhe zueinander ausgerichtet. Besonders bevorzugt wird statt zwei oder mehrerer Streifen einfach ein breiter Streifen verwendet, der die entsprechende Zahl an parallelen Nutzen aufweist.

Alternativ kann vorgesehen sein, dass die einzelnen Streifen nicht auf einem gemeinsamen Positionierband angeordnet sind, sondern dass die Streifen einzeln auf einem Transportband, insbesondere einem Vakuum-Transportband oder Transportband mit Greifer, aufgelegt und jeweils exakt zueinander positioniert werden. Die Positionierung kann zum Beispiel über einen Greifer oder einen Anleger erfolgen, alternativ auch über ein weiteres Transportband, das die Streifen entsprechend übergibt. Durch Anpassung der Geschwindigkeit kann die Regelung des Abstands in Laufrichtung erfolgen.

Eine weitere bevorzugte Ausgestaltung des Verfahrens sieht vor, dass auf die Polymerfolie das oder die Sicherheitsmerkmale für den jeweiligen Nutzen in demselben Abstand aufgebracht wird, der dem Abstand der Anzahl n von dem Nutzen des jeweiligen Streifens entspricht. Durch diese Ausgestaltung wird ermöglicht, dass die Polymerfolie nicht bezüglich jedem einzelnen Sicherheitsmerkmal oder jeder einzelnen Steuerlinie oder -marke abgefragt werden muss, damit diese lagerichtig zu den Nutzen auf dem Streifen positioniert wird, sondern dass eine Abfrage einer Steuerlinie oder -marke für eine vorbestimmte Anzahl von Sicherheitsmerkmalen erforderlich ist, die der Anzahl der Nutzen auf einem Streifen entspricht. Dadurch kann zumindest ein kontinuierlicher Kaschierprozess bezüglich der Anzahl der Nutzen auf dem jeweiligen Streifen erzielt werden, bevor eine erneute Abfrage der jeweiligen Referenzbeziehungsweise Steuerlinie zur exakten Ausrichtung und Positionierung des Streifens und der Polymerfolie zueinander erfolgt. Dadurch kann eine Erhöhung der Verarbeitungsgeschwindigkeit erzielt werden. Gleichzeitig kann dadurch sichergestellt werden, dass die jeweiligen Sicherheitsmerkmale innerhalb der Gruppe exakt zum Nutzen positioniert werden. Dabei wird unter Sicherheitsmerkmal nicht nur ein Sicherheitsmerkmal verstanden, sondern auch eine Gruppe von mehreren Einzelmerkmalen, die zusammen ein Sicherheitsmerkmal bilden.

Des Weiteren ist bevorzugt vorgesehen, dass vor dem Zusammenführen der Polymerfolie und dem zumindest einen Streifen eine Schutzfolie von der Polymerfolie abgezogen wird und vorzugsweise auf dem zumindest einen Streifen oder der Polymerfolie oder auf beide ein Klebemittel, insbesondere ein UV-vernetzbares Klebemittel, aufgebracht wird. Dadurch wird ermöglicht, dass die aufzubringende Polymerfolie solange wie möglich gegen äußere Einflüsse geschützt bleibt.

Des Weiteren ist bevorzugt vorgesehen, dass nach dem Kaschieren der Polymerfolie und dem zumindest einen Streifen eine Schutzfolie von der Polymerfolie abgezogen und vorzugsweise anschließend eine Kratz- und/oder Abriebschutzbeschichtung aufgebracht wird. Im Folgenden wird sich in der Beschreibung auf Kratzschutz bezogen, gemeint ist immer Kratz- und/oder Abriebschutz. Dieser Verfahrensschritt ermöglicht, dass während dem Kaschierprozess eine Schädigung der äußeren Oberfläche der Polymerfolie verhindert ist. Durch die anschließende Aufbringung der Kratzschutzschicht wird die Polymerfolie geschützt. Die Kratzschutzbeschichtung kann in Form eines Lackes, einer Folie oder dergleichen aufgebracht werden.

Des Weiteren ist bevorzugt vorgesehen, dass der Nutzen mit der zumindest einer auflaminierten Polymerfolie auf ein Endformat aus dem Streifen ausgestanzt wird. Durch die aufeinanderfolgenden vorbeschriebenen Verfahrensschritte und der Ausstanzung nach dem Auftragen der Polymerfolie ist eine exakte Kantengeometrie der Nutzen herstellbar. Darüber hinaus kann durch diesen Herstellungsablauf das bislang im Stand der Technik auftretenden Randabschlussproblem gelöst werden. Hierfür wird die Polymerfolie mit einem Übermaß auf den Nutzen aufkaschiert. Durch das anschließende Stanzen auf Endformat kann eine exakte Randabschlusskante erzielt werden. Ein Kratzschutzlack oder eine Kratzschutzfolie kann dabei vor oder nach der Ausstanzung aufgebracht werden.

Des Weiteren kann bevorzugt vorgesehen sein, dass auf oder in die Karte zumindest vor dem Kaschieren mit der Polymerfolie zumindest eine Personalisierung auf- oder eingebracht wird. Dadurch kann dieser Arbeitsschritt unmittelbar in den kontinuierlichen Herstellungsprozess eingebunden werden.

Nach einer weiteren bevorzugten Ausgestaltung des Verfahrens ist vorgesehen, dass die Sicherheitskarte aus zumindest einer Schicht aus biegesteifem Kunststoff, vorzugsweise aus der Gruppe umfassend Polycarbonat, hergestellt ist. Dabei kann insbesondere Bisphenol A Polycarbonat eingesetzt werden. Alternative Materialien, die ebenfalls zur Ausbildung von biegesteifen Karten eingesetzt werden können, sind PET (Polyethylenglykolterephthalat), PMMA (Polymethylmethacrylat), TPU (Thermoplastisches Polyurethan-Elastomer), TPE (Thermoplastisches Elastomer), PE (Polyethylen), PP (Polypropylen), PI (Polyimid) oder Polytrans-Isopren, ABS (Acrylnitril-Butadien-Styrol), PVC (Polyvinylchlorid) und Copolymeren solcher Polymere. Des Weiteren sind auch bevorzugt Verbindungen zwischen PC und TPE oder dergleichen möglich.

Des Weiteren ist bevorzugt vorgesehen, dass die auf zumindest einem Nutzen aufzukaschierende Polymerfolie, beispielsweise ihr Funktionalpolymer, aus Photopolymeren, Silberhalogenidfilmen, Dichromatgelatine oder dergleichen bestehen.

Des Weiteren ist bevorzugt vorgesehen, dass das Sicherheitsmerkmal oder die Sicherheitsmerkmale auf holographischem, insbesondere volumenholographischem, Wege in die Polymerfolie eingebracht werden.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine perspektivische Ansicht eines Sicherheitsproduktes,
- Figur 2: eine schematische Ansicht von oben auf ein Positionierband, welches Streifen mit mehreren Nutzen aufnimmt,
- Figur 3: eine schematische Ansicht von oben auf eine Polymerfolie zum Aufkaschieren auf einem Nutzen,
- Figur 4: eine schematische Darstellung zur Herstellung von mehrlagigen Sicherheitsprodukten und
- Figur 5: eine weitere schematische Darstellung zur Herstellung von mehrlagigen Sicherheitsprodukten.

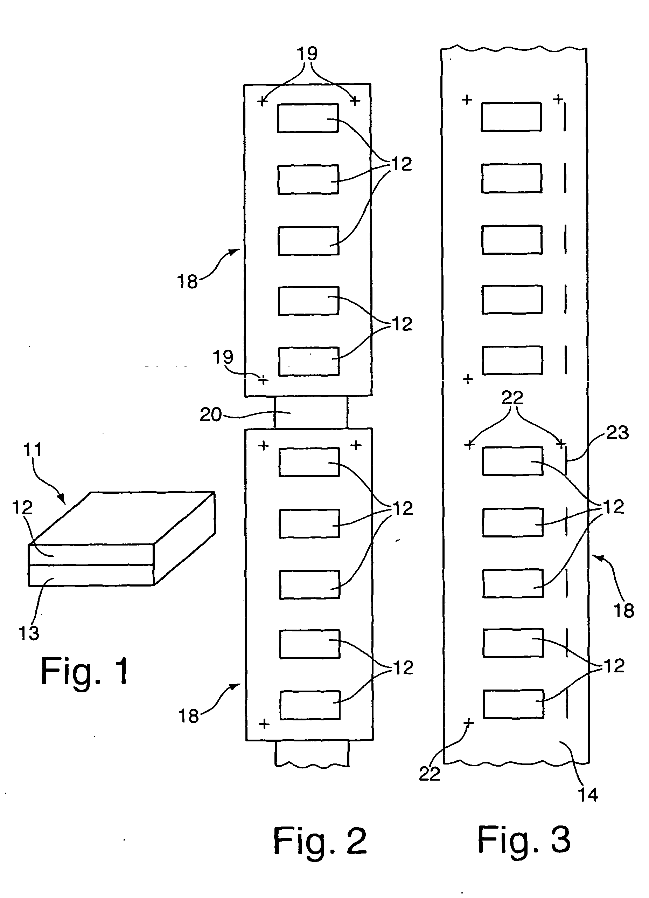

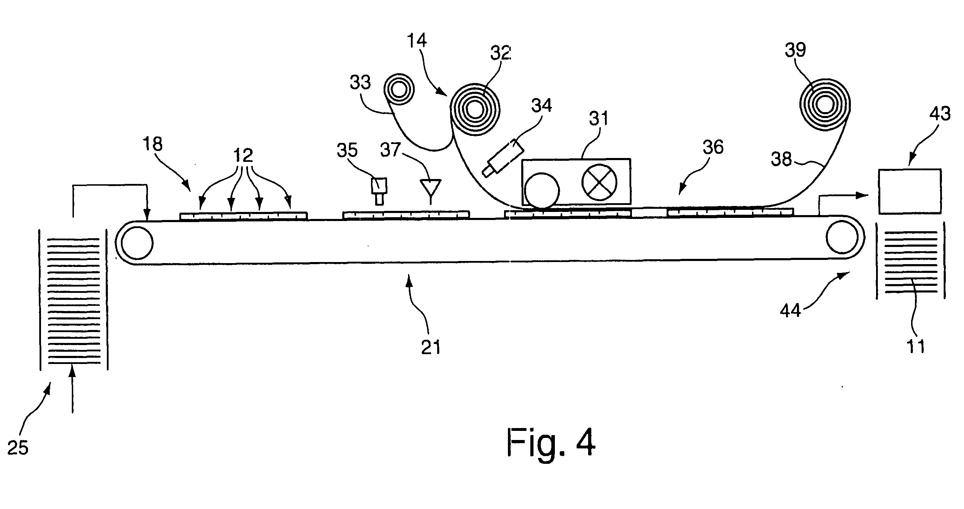

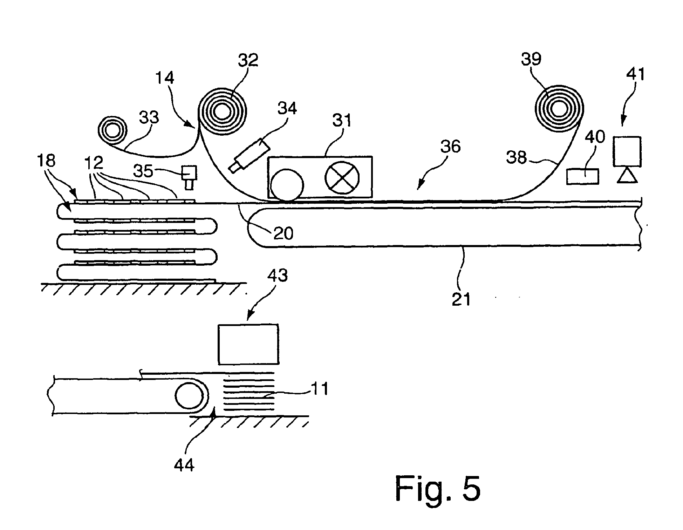

In Figur 1 ist eine perspektivische Ansicht auf ein Sicherheitsprodukt 11 dargestellt, welches aus zumindest einer Karte 13 und zumindest einer auf zumindest einer Seite der Karte 13 aufgebrachten Polymerfolie 14, welche als Rollenware hergestellt ist, besteht. Zur rationalen Herstellung einer solchen Karte 13 ist beispielsweise vorgesehen, dass eine Anzahl von n > 1 von Nutzen 12 in einem Streifen 18 zusammengefasst werden, die in einem der in Figur 4 oder Figur 5 dargestellten Kaschierprozesse mit zumindest einer Polymerfolie 14 beschichtet werden.

Ein solcher Nutzen 11 kann als Personalausweis, Reisepass, Identifikationskarte, Zugangsberechtigung, Führerschein, Personalisierungsdatenseite eines buchartigen Wertdokumente oder dergleichen eingesetzt werden. Eine solche Sicherheitskarte 11 kann auch unpersonalisiert, jedoch mit Sicherheitsmerkmalen ausgebildet sein. Die für das Sicherheitsprodukt 11 vorgesehene Polymerfolie 14 kann veredelt, individualisiert und/oder personalisiert sein. Dies kann auch durch eine holographische Belichtung, wie dies in der EP 0 896 260 A1 geschildert ist, erfolgen.

In Figur 2 ist eine Anordnung von beispielsweise zwei Streifen 18 auf einem Positionierband 20 zur nachfolgenden Kaschierung mit einer Polymerfolie 14 dargestellt. In einem nicht näher dargestellten Bogen, insbesondere einem Bogenlaminat, sind mehrere Nutzen 12 hintereinander und nebeneinander in einer vorbestimmten Reihenfolge enthalten. Aus diesem Bogenlaminat werden Streifen 18 ausgeschnitten, welche beispielsweise vier oder fünf Nutzen 12 umfassen. Diese Nutzen 12 sind bevorzugt in einem vorbestimmten, insbesondere im gleichen, Abstand zueinander in einer Reihe hintereinander angeordnet und können sowohl im Längsformat als auch im Querformat hintereinander positioniert sein. Besonders bevorzugt erfolgt die Aufbringung derart, dass der Abstand der Streifen mit dem aufzukaschierenden Polymerfilm in Übereinstimmung gebracht wird. Diese Streifen 18 werden auf dem Positionierband 20 aufgebracht und miteinander verbunden, so dass eine Endlosbahn von hintereinander angeordneten Streifen 18 durch das Positionierband 20 ausgebildet ist. Bei diesem Positionierband 20 kann es sich um eine Folie oder dergleichen handeln, welche sicherstellt, dass der Abstand zwischen den einzelnen Streifen 18 trotz möglicher Spannungen während des Transportes aufrechterhalten bleibt. Statt eines Positionierbandes 20 kann man eine flexible Verbindung zwischen den Streifen 18 auch derart ausgestalten, dass sie während des Laminiervorganges automatisch erzeugt wird, insbesondere bei einer Streifenlamination, indem von der Rolle zugeführte Folien in den Zwischenstücken nicht laminiert werden. Auch nachträglich können die Streifen 18, neben dem Aufbringen auf das Positionierband 20, miteinander flexibel verbunden werden, zum Beispiel durch Klebeelemente. Die Anpassung des Abstands der einzelnen Streifen 18 kann in allen Fällen zum Beispiel durch ein Greifersystem erfolgen, dass die miteinander verbundenen Streifen 18 transportiert und individuell positioniert.

Auf dem Streifen 18 ist zumindest eine Referenzmarke 19 vorgesehen, Bevorzugt sind drei als Passermarken ausgebildete Referenzmarken 19 aufgebracht, um die Lage des Streifens 18 zu erfassen und hinsichtlich der Transportrichtung in X-Richtung und/oder in Y-Richtung vor dem Kaschierprozess mit der Polymerfolie 14 ausrichten zu können. Alternativ zu der vorbeschriebenen Positionierung der Streifen 18 hintereinander auf einem Positionierband 20 kann vorgesehen sein, dass diese Streifen 18 unmittelbar auf ein Transportband 21, welches in Figur 4 dargestellt ist, aufgelegt werden und während dem Auflegen der einzelnen Streifen hintereinander die analoge Ausrichtung der Streifen zueinander wie beim Aufbringen auf das Positionierband 20 erfolgt. Das Transportband 21 ist bevorzugt als Vakuumband ausgebildet und insbesondere als Endlosband vorgesehen. Dieses Transportband 21 kann ebenfalls zur Aufnahme des Positionierbandes 20 mit dem darauf angeordneten Streifen 18 oder anderweitig flexibel miteinander verbundenen Streifen 18 dienen.

In Figur 3 ist die Polymerfolie 14, welche als Bahnware bereitgestellt wird, in einer Ansicht von oben dargestellt. Eine erste Ausführungsform weist eine beliebige Hintereinanderreihung von Sicherheitsmerkmalen auf, wobei bevorzugt jedem Sicherheitsmerkmal eine Steuerlinie 23 zugeordnet ist. Durch eine separate Abfrage der Steuerlinie 23 auf der Polymerfolie 14 kann dann jeweils eine exakte Zuführung und Positionierung der Sicherheitsmerkmale auf der Polymerfolie 14 zum jeweiligen Nutzen 12 erfolgen. Bevorzugt ist vorgesehen, dass eine Gruppe von Sicherheitsmerkmalen, die in der Anzahl der Gruppe der Nutzen 12 auf dem Streifen 18 entspricht, denselben Abstand zueinander aufweisen. Darüber hinaus kann vorgesehen sein, dass auch der Abstand zwischen den einzelnen Gruppen der Sicherheitsmerkmale dem Abstand zwischen den einzelnen Streifen 18 entspricht.

Die Polymerfolie 14 kann zusätzlich Referenzmarken 22 aufweisen, die in der Anordnung mit den Referenzmarken 19 des Streifens 18 übereinstimmen. Diese jeweiligen Referenzmarken 19, 22 beziehungsweise Passermarken können zumindest vor dem Kaschierprozess jeweils optisch erfasst werden, wodurch ermöglicht ist, dass die Polymerfolie in X-Richtung, also in Transportrichtung, als auch in Y-Richtung ausgerichtet ist und auf die Zuführungsposition der Streifen 18 angepasst werden kann. Die lagerichtige Anordnung von Sicherheitsmerkmalen der Polymerfolie 14 auf einer Karte 13 ist bei Deckungsgleichheit der Referenzmarken 19, 22 gegeben. Zusätzlich sind auf der Polymerfolie 14 Steuerlinien 23 vorgesehen, die zur Erfassung der Position des Sicherheitsmerkmals jeweils abgefragt werden.

In Figur 4 ist schematisch ein Herstellungsprozess für das Sicherheitsprodukt 11 dargestellt. In einem separaten Herstellungsprozess werden beispielsweise die einzelnen Streifen 18 in einem Speicher 24 gestapelt für die Kaschierung bereitgestellt. Anschließend erfolgt in einer Übergabestation das Auflegen der Streifen 18 auf das Transportband 21, welches z. B. als Vakuumband ausgestaltet sein kann. Bevorzugt ist das Transportband 21 als Endlosband ausgebildet. Dazu werden die Streifen 18, die sich in definierter Reihenfolge z.B. in dem Speicher 25 oder einem Anleger befinden, einzeln abgenommen und positioniert. Dabei wird der Abstand der Streifen 18 zueinander mit der Polymerfolie 14 abgeglichen. Gegebenenfalls werden die Streifen 18 vor dem Kaschierprozess flexibel miteinander verbunden. Gegebenenfalls werden die Streifen 18 am Ende des Prozesses miteinander verbunden.

Die Nutzen 12 auf dem jeweiligen Streifen 18 können bereits personalisiert oder individualisiert sein. Eine solche Personalisierung kann beispielsweise ein Lichtbild umfassen, das mit Hilfe eines Druckverfahrens oder einer photographischen Belichtung erzeugt wurde. Es können auch weitere Personalisierinformationen, wie beispielsweise Name, Dokumentennummer, Unterschrift usw. eingebracht werden. Alternativ können diese Personalisierungsschritte auch später in Teilen oder komplett, beispielsweise mit Hilfe eines Lasergravurverfahrens, erfolgen. Die Streifen 18 werden nacheinander über das Transportelement 21 einer Kaschierstation 31 zugeführt. Gleichzeitig wird die Polymerfolie 14, welche als Rollenware bereitgestellt ist, von einer Rolle 32 abgezogen. Eine erste Schutzfolie 33 wird entfernt und aufgerollt. Die von der Schutzfolie 33 befreite Polymerfolie 14 wird mit einem Klebemittel, beispielsweise in einer hier nicht gezeigten Klebestation 37, die vor der Kaschierstation 31 positioniert ist, beschichtet. Ebenso oder alternativ können auch die Streifen 18 mit einem Klebemittel in einer Klebestation 37 beschichtet werden. Bevorzugt handelt es sich um einen flüssigen Kleber, insbesondere um einen UV-vernetzenden Kleber. Alternativ sind auch andere Klebemittel verwendbar, zum Beispiel thermisch reaktive, thermoplastische, druckempfindliche, feuchtigkeitsvernetzende Klebemittel, 2K-Systeme, oder dergleichen. Eine thermoplastische Schicht kann insbesondere auch aufgetragen werden, beispielsweise wieder von einer Rolle.

Im Anschluss daran erfolgt ein Andrücken der Polymerfolie 14 auf den Streifen 18 mit den sich dazwischen befindenden Klebemitteln. Durch einen entsprechenden Vorlauf der Polymerfolie 14 kann erreicht werden, dass im Falle personalisierter Streifen und Polymerfolie 14 die richtige Startposition erreicht wird, um den Kaschiervorgang nutzengenau zu vollziehen. Durch das Andrücken wird dabei erzielt, dass keine Luftblasen zwischen den Schichten entstehen. Dies kann beispielsweise auch dadurch erreicht werden, indem bei flüssigen Klebemitteln mehr als die nötige Auftragsmenge des Klebers auf den Streifen 18 appliziert wird und beim Andrücken zum Beispiel über eine Walze quasi herausgedrückt wird. Das herausgedrückte Klebemittel kann aufgefangen und wieder verwendet werden. Bevorzugt befindet sich am Ende des Streifens 18 jedoch Platz, der nicht durch Einzelnutzen belegt ist, um eine Auslaufzone für den flüssigen Kleber beim Kaschieren zu erzeugen.

Das Aufbringen des Klebemittels kann beispielsweise über ein Druckverfahren auch strukturiert erfolgen, so dass es unterschiedlich stark klebende Bereiche gibt. Alternativ können auch unterschiedliche Klebemittel mit unterschiedlicher Klebekraft bis hin zu einem Kleber-Iris-Verlauf verwendet werden. Dies steht insbesondere dem zerstörungsfreien Ablösen eines Hologrammes entgegen. Des Weiteren ist auch denkbar, die Polymerfolie vor oder nach dem Aufkleben an- oder durchzuspritzen, das heißt, mit Sollbruchstellen zu versehen. Das Durchspritzen der Polymerfolie kann vor dem Bekleben erfolgen, da die Oberseite der Schutzfolie die bereitgestellte Polymerfolie, also den Folienverbund, immer noch zusammenhält.

Unmittelbar im Anschluss erfolgt im Falle eines UV-Klebers dessen UV-Vernetzung. In diesem Fall ist bekannt, dass viele UV-Systeme die holographische Beschichtung derart angreifen können, dass sie die Wahrnehmung der Hologramme verändern, in dem beispielsweise Rekonstruktionsfällenlänge und/oder -winkel verändert werden. Diese Veränderung ist jedoch hinderlich bei maschinenprüfbaren Merkmalen, bei denen z.B. die Präzision einer holografischen Rekonstruktion bzgl. ihrer Beugungswinkel überprüft wird. Sofern die Veränderung so gering wie möglich gehalten werden soll, muss die Zeit entsprechend minimiert werden. In jedem Fall ist es wichtig, während eines definierten Zeitintervalls die UV-Vernetzung durchzuführen. Die Einstellung des Zeitintervalls der UV-Vernetzung ergibt sich aus Beginn und Ende der UV-Strecke, den räumlichen Abständen zwischen dem In-Kontakt-Bringen der Polymerfolie 14 und dem Klebemittel sowie dem Beginn der UV-Strecke und beides in Kombination mit der Laufgeschwindigkeit des Transportbandes 21. Im Falle der nicht gewünschten Veränderungen des Hologrammes ist der räumliche Abstand zwischen dem In-Kontakt-Bringen von Polymerfolie und Kleber sowie der Beginn der UV-Strecke zu minimieren. Die Länge der UV-Strecke richtet sich nach Transportgeschwindigkeit sowie der UV-Leistung der Lampen in der UV-Strecke. Gegebenenfalls kann es erforderlich werden, spezielle Kalt-UV-Lampen zu verwenden, um einen übermäßigen Wärmeübertrag auf den Verbund Polymerfolie-Klebemittel-Streifen zu verhindern.

Bei bestimmten UV-Klebesystemen ist es auch möglich, die UV-Vernetzung bereits vor dem Kaschiervorgang zu beginnen. Im Fall einer Beschichtung der Streifen 18 würde also die UV-Lampe schon vor der Kaschierstation platziert werden. Das Kaschieren erfolgt dann auf den Kleber, dessen Vernetzungsreaktion bereits gestartet wurde.

Neben UV-Klebemitteln können die anderen erwähnten Klebemittel ebenfalls verwendet werden. Insbesondere beheizte Walzen können bei thermischen Klebern eingesetzt werden. Es können auch Mischformen von Klebemitteln vorgesehen sein, die beispielsweise sowohl eine UVvernetzende und eine thermische Komponente aufweisen. In einem solchen Fall kann erst ein UV-Vorverkleben durchgeführt werden und unmittelbar danach oder zeitlich getrennt in einer Heizstrecke eine Nachvernetzung erfolgen.

Bevor die Polymerfolie 14 auf den Streifen 18 aufkaschiert wird, erfolgt bevorzugt eine Abfrage der Steuerlinie 23 und/oder der Referenzmarke 22 auf der Polymerfolie 14 durch eine Leseeinrichtung 34. Des Weiteren kann durch eine weitere Leseeinrichtung 35 die Referenzmarke 19 des jeweiligen Streifens 18 abgefragt werden, um im Anschluss daran den Streifen 18 und die Polymerfolie 14 in X- und Y-Richtung aufeinander anzupassen. Eine solche Anpassung kann beispielsweise durch die Ansteuerung von Vakuumsaugern oder durch Verschiebung von Querachsen, die für den Längstransport erforderlich sind, erfolgen. Die Positionierung in Laufrichtung kann auch durch einen Wechsel des Transportbandes 21 erfolgen, wenn das System aus mehreren Transportbändern 21 besteht, die sich in diesem Fall in ihren Geschwindigkeiten unterscheiden können.

Nach dem Ausrichten von Streifen 18 und Polymerfolie 14 werden die Polymerfolie 14 und der jeweilige Streifen 18 in der Kaschierstation 31 durch Andrücken, wie bereits beschrieben, miteinander zu einem Verbund 36 verklebt. Im Anschluss daran wird der Verbund 36 aus der Kaschierstation 31, welche auch eine Heizstrecke für eine Nachvernetzung umfassen kann, herausgeführt.

Anschließend wird eine weitere Schutzschicht 38, die auf einer Oberseite der Polymerfolie 14 aufgebracht ist, abgezogen und auf einer Rolle 39 aufgewickelt. Im Anschluss daran wird eine Heizstation 40 durchlaufen, bevor in einer weiteren Station 41 eine Kratzfestschicht oder eine Kratzschutzfolie aufgebracht wird.

Nachfolgend wird der streifenförmige Verbund gemäß einer ersten Ausführungsform in einer Stanz- oder Schneidstation 43 in einzelne Streifen vereinzelt und in einem Speicher 44 übereinander gestapelt. Des Weiteren kann vorgesehen sein, dass die einzelnen Nutzen im Streifen 18 innerhalb der Stanzstation 43 auf ein Endformat ausgestanzt werden und anschließend die daraus entstehenden Sicherheitsprodukte 11 in einem gemeinsamen Speicher 44 übereinander gestapelt werden.

Aufgrund der Anordnung der Nutzen 12 auf dem Streifen 18 ist ermöglicht, dass die Polymerfolie 14 mit einem Übermaß zum Nutzen 12 auf diese aufkaschiert werden kann, so dass durch eine nachfolgende Ausstanzung zum Sicherheitsprodukt 11 ein sauberer Rand erzeugt wird. Dadurch ist das Randabschlussproblem der Sicherheitsprodukte 11 gegenüber den aus dem Stand der Technik bekannten Sicherheitsprodukten 11 gelöst.

Alternativ kann auch vorgesehen sein, dass nach dem Abziehen der weiteren Schutzfolie 38 zunächst ein Ausstanzen der Nutzen 12 aus dem Streifen 18 erfolgt und anschließend eine Kratzschutzbeschichtung aufgebracht wird. Des Weiteren kann alternativ vorgesehen sein, dass die weitere Schicht 38 vor der Kaschierstation 31 abgezogen und anschließend eine Kratzschutzbeschichtung aufgebracht wird, so dass die Kratzschutzbeschichtung bereits auf der Polymerfolie 14 vor der Kaschierstation 31 aufgetragen ist. Des Weiteren kann vorgesehen sein, dass die Polymerfolie 14 bereits intrinisch eine Kratzfestbeschichtung, zum Beispiel in Form eines Lackes oder einer Folie, aufweist, die sich zwischen Schutzfolie 38 und dem eigentlichen Funktionspolymer befindet, und beim Abziehen von Schutzfolie 38 auf dem Funktionspolymer verbleibt und damit die Verwendung einer weiteren Station zum Aufbringen des Kratz- und/oder Abriebschutzverbundes erübrigt.

In Figur 5 ist eine alternative Ausgestaltung des Verfahrens zur Herstellung eines Sicherheitsproduktes 11 zu Figur 4 dargestellt. Dieser Herstellungsprozess weicht dahingehend von dem in Figur 4 beschriebenen Herstellungsprozess ab, dass für die Kaschierung der Streifen 18 mit der Polymerfolie 14 die einzelnen Streifen 18 in einer vorbestimmten Reihenfolge auf dem Positionierband 20 vorpositioniert sind, wie dies in Figur 2 dargestellt und beschrieben ist. Statt dem Positionierband 20 ist auch, wie weiter vorne beschrieben, eine andere flexible Verbindung zwischen den Streifen 18 möglich. Durch eine Faltung eines freien Bereiches des Positionierbandes 20 zwischen zwei Streifen 18 kann eine gestapelte Anordnung der Streifen 18 bereitgestellt werden. Diese gestapelte Anordnung wird aus einem Speicher 25 abgezogen und über ein Transportband 21 durch die Kaschierstation 31 und den weiteren gegebenenfalls vorhandenen Stationen bis zum Speicher 44 geführt. Dabei kann vorgesehen sein, dass das Transportband 21, welches ebenfalls als Vakuumband ausgebildet sein kann, durch ein Vakuum das Positionierband 20 zum Transport fixiert. Alternativ können auch Greifer an dem Transportband 21 vorgesehen sein, welche an dem Positionierband 20 und/oder an den Streifen 18 angreifen. Die einzelnen Arbeitsschritte erfolgen in derselben Reihenfolge wie im Herstellungsprozess gemäß Figur 4 beschrieben ist. Analoges gilt für die Endverarbeitung beziehungsweise Vereinzelung der Nutzen 12 zur Herstellung der Sicherheitsprodukte 11.

Weitere, gegebenenfalls vorhandene Stationen können zum Beispiel eine Heizstation 40 sein, welche durchlaufen wird, bevor in einer weiteren Station 41 eine Kratzfestschicht oder eine Kratzschutzfolie aufgebracht wird.

## Patentansprüche

1. Verfahren zur Herstellung von mehrlagigen Sicherheitsprodukten (11), bestehend aus zumindest einer Karte (13) und zumindest einem auf zumindest einer Seite der Karte (13) aufgebrachten Polymerfolie (14), welche als Rollenware bereitgestellt wird und mit zumindest einem Sicherheitsmerkmal versehen ist, wobei
- eine Rollenbahn der Polymerfolie (14) und zumindest zwei Streifen (18) mit jeweils einer n-fachen Anzahl an Nutzen (12) einer Kaschierstation (31) zugeführt und kaschiert werden,
- ein definierter Abstand zwischen den zumindest zwei hintereinander angeordneten Streifen (18), die auf einem gemeinsamen Positionierband (20) oder Transportband (21) aufgebracht sind, eingestellt wird,
- vor dem Kaschieren eine Steuerlinie (23) auf der Polymerfolie (14) abgefragt wird, die dem zumindest einen auf dem jeweiligen Nutzen (12) aufzubringenden Sicherheitsmerkmal zugeordnet ist oder eine dem Nutzen (12) oder dem Streifen (18) zugeordnete Referenzmarke (19) abgefragt wird oder die Steuerlinie (23) und die Referenzmarke (22) abgefragt werden und
- eine Zuführgeschwindigkeit oder eine Zuführrichtung oder beides von der Rollenbahn der Polymerfolie (14) und dem Streifen (18) zur exakten Ausrichtung zueinander angepasst werden.

2. Verfahren nach Anspruch 1, **dadurch gekennzeichnet, dass** der jeweilige Streifen (18) mit einer Anzahl n an Nutzen (12) von n ≥ 1, insbesondere n > 3 und n ≤ 20, hergestellt wird und vorzugsweise vier bis fünf Nutzen umfasst.

3. Verfahren nach Anspruch 1 oder 2, **dadurch gekennzeichnet, dass** der zumindest eine Streifen (18) aus einem Bogen vor dem Kaschieren mit der vorzugsweise vorpersonalisierten oder personalisierten Polymerfolie (14) vereinzelt, insbesondere ausgestanzt oder ausgeschnitten, wird.

4. Verfahren nach einem der vorhergehenden Ansprüche, **dadurch gekennzeichnet, dass** nach dem Kaschieren der Polymerfolie (14) auf dem zumindest einen Streifen (18) ein daraus gebildetes Streifenlaminat randbeschnitten wird.

5. Verfahren nach einem der vorhergehenden Ansprüche, **dadurch gekennzeichnet, dass** die Streifen (18) derart vereinzelt werden, dass an einem Ende des Streifens (18) ein nutzenfreier Raum verbleibt.

6. Verfahren nach einem der vorhergehenden Ansprüche, **dadurch gekennzeichnet, dass** die Streifen (18) zur Bildung einer Anlagekante definiert aus dem Bogen oder aus der Streifenlamination geschnitten werden.

7. Verfahren nach einem der vorhergehenden Ansprüche, **dadurch gekennzeichnet, dass** mehrere Streifen (18) in einer vordefinierten Reihenfolge hintereinander angeordnet werden.

8. Verfahren nach einem der vorhergehenden Ansprüche, **dadurch gekennzeichnet, dass** der Abstand zwischen den beiden hintereinander angeordneten Streifen (18) derart eingestellt wird, dass der Abstand der letzten Nutzen (12) im vorausgehenden Streifen (18) zum ersten Nutzen (12) im nachfolgenden Streifen (18) dem Abstand der Nutzen (12) in dem jeweiligen Streifen (18) entspricht.

9. Verfahren nach einem der Ansprüche 1 bis 7, **dadurch gekennzeichnet, dass** zur Einstellung des Abstandes zwischen zwei Streifen (18) zumindest Referenzmarken (19) der zwei Streifen (18) abgefragt werden und die Einstellung des Abstandes der beiden Streifen (18) nachgeregelt wird.

10. Verfahren nach einem der vorhergehenden Ansprüche, **dadurch gekennzeichnet, dass** ein definierter Abstand zwischen zumindest zwei nebeneinander angeordneten Streifen (18), die vorzugsweise auf einem gemeinsamen Positionierband (20) oder Transportelement (21) aufgebracht sind, eingestellt wird.

11. Verfahren nach einem der vorhergehenden Ansprüche, **dadurch gekennzeichnet, dass** auf die Polymerfolie (14) das oder die Sicherheitsmerkmale für den jeweiligen Nutzen (12) in demselben Abstand aufgebracht wird, der dem Abstand der Anzahl n von Nutzen (12) in dem jeweiligen Streifen (18) entspricht.

12. Verfahren nach einem der vorhergehenden Ansprüche, **dadurch gekennzeichnet, dass** vor dem Zusammenführen von der Polymerfolie (14) und dem zumindest einen Streifen (18) eine Schutzfolie (33) von der Polymerfolie (14) abgezogen wird und vorzugsweise auf den zumindest einen Streifen (18) oder die Polymerfolie (14) oder beide ein Klebemittel, insbesondere ein UV-vernetzbares Klebemittel, aufgebracht wird.

13. Verfahren nach einem der vorhergehenden Ansprüche, **dadurch gekennzeichnet, dass** nach dem Kaschieren der Polymerfolie (14) und dem zumindest einen Streifen (18) eine Schutzfolie (38) von der Polymerfolie (14) abgezogen und vorzugsweise anschließend eine Kratzschutzbeschichtung aufgebracht wird.

14. Verfahren nach einem der vorhergehenden Ansprüche, **dadurch gekennzeichnet, dass** der Nutzen (12) mit der zumindest einen aufkaschierten Polymerfolie (14) auf ein Endformat aus dem Streifen (18) ausgestanzt wird und vorzugsweise vor dem Stanzen eine Schutzlackierung aufgebracht wird.

15. Verfahren nach einem der vorhergehenden Ansprüche, **dadurch gekennzeichnet, dass** auf oder in die Karte (13) zumindest vor dem Kaschieren mit der Polymerfolie (14) zumindest eine Personalisierung auf- oder eingebracht wird.

## Claims

1. A method of fabricating multilayer security products (11) consisting of at least one card (13) and at least one polymer film (14) which is applied to at least one side of said card (13) and is supplied as a rollstock product provided with at least one security feature, wherein
- a rolled web of the polymer film (14) and at least two strip (18) having each an n-fold number of pieces (12) are fed to, and lined in, a lining station (31),
- a defined distance is set between the at least two strips (18) disposed one behind another which are disposed on a common positioning tape (20) or transport tape (21),
- prior to lining, a control line (23) formed on the polymer film (14) which is associated with the at least one security feature to be applied to the respective piece (12) is retrieved, or a reference mark (19) associated with the piece (12) or the strip (18) is retrieved, or both the control line (23) and the reference mark (22) are retrieved, and
- a feed rate or a feed direction, or both, of the rolled web of the polymer film (14) and the strip (18) are adjusted relative to each other for precise alignment.

2. The method as claimed in claim 1, **characterised in that** the respective strip (18) is fabricated with a number n of pieces (12), with n ≥ 1, in particular n > 3, and n ≤ 20, and preferably comprises between four and five pieces.

3. The method as claimed in claim 1 or 2, **characterised in that**, prior to the lining with the preferably pre-personalised or personalised polymer film (14), the at least one strip (18) is separated from a sheet in particular through stamping or cutting.

4. The method as claimed in any one of the preceding claims, **characterised in that** subsequent to the lining of the at least one strip (18) with the polymer film (14), the edges of the strip-shaped laminate thus formed are trimmed.

5. The method as claimed in any one of the preceding claims, **characterised in that** the strips (18) are separated in such a manner that on one end of the strip (18) a piece-free space will remain.

6. The method as claimed in any one of the preceding claims, **characterised in that** the strips (18) designed to form a contact edge are cut from the sheet or from the strip-shaped laminate in a defined manner.

7. The method as claimed in any one of the preceding claims, **characterised in that** a plurality of strips (18) are arranged in a predefined succession one behind another.

8. The method as claimed in any one of the preceding claims, **characterised in that** the distance between the two strips disposed one behind the other being set in such a manner that the distance separating the last piece (12) in the preceding strip (18) from the first piece (12) in the following strip (18) is equal to the distance separating the pieces (12) within the respective strips (18) from one another.

9. The method as claimed in any one of claims 1 to 7, **characterised in that** for setting the distance between two strips (18) at least reference marks (19) of the two strips (18) are retrieved and the setting of the distance of the two strips (18) is re-adjusted.

10. The method as claimed in any one of the preceding claims, **characterised in that** a defined distance is set between at least two strips (18) arranged side by side which are preferably disposed on a common positioning tape (20) or transport element (21).

11. The method as claimed in any one of the preceding claims, **characterised in that** the security feature for a given piece (12) is applied to the polymer film (14) at a distance which corresponds to the distance between the number n of pieces (12) in the respective strip (18).

12. The method as claimed in any one of the preceding claims, **characterised in that** before the polymer film (14) and the at least one strip (18) are joined together, a protective film (33) is removed from the polymer film (14), and preferably an adhesive, in particular a UV-curable adhesive, is applied to the at least one strip (18) or to the polymer film (14) or to both of them.

13. The method as claimed in any one of the preceding claims, **characterised in that** subsequent to the lining of the polymer film (14) and the at least one strip (18) a protective film (38) is removed from the polymer film (14) and subsequently a scratch-resistant protective coating is preferably applied.

14. The method as claimed in any one of the preceding claims, **characterised in that** the piece (12), together with the at least one polymer film (14) applied as a liner, is separated from the strip (18) by punching so as to be given its final format and preferably a protective lacquer is applied before a punching operation.

15. The method as claimed in any one of the preceding claims, **characterised in that** at least prior to the lining operation with the polymer film (14) at least one personalisation feature is applied to, or incorporated into, the card (13).

## Revendications

1. Procédé de fabrication de produits de sécurité à plusieurs couches (11), composés au moins d'une carte (13) et au moins d'une feuille polymère (14) disposée sur au moins un côté de la carte (13), laquelle feuille est disposée sous forme de rouleau et prévue avec au moins une caractéristique de sécurité, selon lequel
- un guide à rouleaux de la feuille polymère (14) et au moins deux bandes (18) sont ajoutés et contrecollés, avec respectivement un nombre n de points d'utilisation (12) d'une station de contrecollage (31),
- une distance prédéfinie est ajustée entre les deux bandes (18) au moins, agencées l'une derrière l'autre, lesquelles sont disposées sur une bande de positionnement (20) ou sur une bande de transport (21) commune,
- avant le contrecollage, une ligne de guidage (23) est testée sur la feuille polymère (14), laquelle est affectée au moins à une des caractéristiques de sécurité devant être appliquée sur le point d'utilisation (12) correspondant ou une marque de référence (19) affectée à un des points d'utilisation (12) ou à une des bandes (18) est testée ou la ligne de guidage (23) et la marque de référence (22) sont testées et
- une vitesse de déplacement ou un sens de déplacement, ou les deux, du guide à rouleaux de la feuille polymère (14) et de la bande (18) sont ajustés l'un par rapport à l'autre dans un alignement exact.

2. Procédé selon la revendication 1, **caractérisé en ce que** la bande (18) respective est fabriquée avec le nombre n de points d'utilisation (12) sur n ≥ 1, plus particulièrement n > 3 et n ≤ 20 et comprend de préférence 4 à 5 points d'utilisation.

3. Procédé selon la revendication 1 ou 2, **caractérisé en ce qu'**une des bandes (18) au moins est isolée par une feuille avant le contrecollage, avec de préférence une feuille polymère (14) personnalisée au préalable ou personnalisée, plus particulièrement perforée ou découpée.

4. Procédé selon l'une quelconque des revendications précédentes, **caractérisé en ce qu'**un laminat de bande formé après le contrecollage de la feuille polymère (14) sur au moins une bande (18) est rogné.

5. Procédé selon l'une quelconque des revendications précédentes, **caractérisé en ce que** les bandes (18) sont isolées de sorte qu'il reste un espace libre pour le point d'utilisation à l'extrémité de la bande (18).

6. Procédé selon l'une quelconque des revendications précédentes, **caractérisé en ce que** les bandes (18) sont découpées pour former une arête de placement définie à partir de la feuille ou du laminage de la bande.

7. Procédé selon l'une quelconque des revendications précédentes, **caractérisé en ce que** plusieurs bandes (18) sont disposées les unes derrière les autres dans un ordre prédéfini.

8. Procédé selon l'une quelconque des revendications précédentes, **caractérisé en ce que** la distance entre les deux bandes (18) disposées l'une derrière l'autre est ajustée de sorte que la distance du dernier point d'utilisation (12) de la bande qui précède (18) le premier point d'utilisation (12) de la bande qui suit (18) correspond à la distance du point d'utilisation (12) dans la bande (18) correspondante.

9. Procédé selon l'une quelconque des revendications 1 à 7, **caractérisé en ce que** pour ajuster la distance entre deux bandes (18), au moins les marques de référence (19) des deux bandes (18) sont testées et la mise au point de la distance des deux bandes (18) est ajustée.

10. Procédé selon l'une quelconque des revendications précédentes, **caractérisé en ce qu'**une distance définie entre au moins deux bandes (18) disposées l'une à côté de l'autre, qui sont placées de préférence sur une bande de positionnement (20) ou sur une bande de transport (21) commune, est ajustée.

11. Procédé selon l'une quelconque des revendications précédentes, **caractérisé en ce que** la ou les caractéristiques de sécurité du point d'utilisation (12) correspondant sont placées sur la feuille polymère (14) à une distance égale à celle du nombre n de points d'utilisation (12) dans la bande (18) correspondante.

12. Procédé selon l'une quelconque des revendications précédentes, **caractérisé en ce qu'**une feuille de protection (33) est séparée de la feuille polymère (14) avant la réunion de la feuille de polymère (14) et au moins une bande (18) et qu'un adhésif, plus particulièrement un adhésif réticulable aux UV, est placé de préférence sur une des bandes (18) au moins ou sur la feuille polymère (14) ou sur les deux.

13. Procédé selon l'une quelconque des revendications précédentes, **caractérisé en ce qu'**une feuille de protection (38) est retirée de la feuille polymère (14) après le contrecollage de la feuille polymère (14) et d'une des bandes (18) au moins et qu'une couche de protection grattée est ensuite disposée.

14. Procédé selon l'une quelconque des revendications précédentes, **caractérisé en ce que** le point d'utilisation (12) est perforé dans la bande (18) avec au moins une des feuilles polymères (14) contrecollées dans un format définitif et est placé de préférence avant le perforage d'une laque de protection.

15. Procédé selon l'une quelconque des revendications précédentes, **caractérisé en ce qu'**au moins un élément de personnalisation est appliqué ou posé sur ou dans la carte (13) au moins avant le contrecollage avec la feuille polymère (14).
